# FASCICULE DE BREVET EUROPEEN

(11) **EP 1 337 979 B1**
(45) Date de publication et mention de la délivrance du brevet: **19.03.2008**
(21) Numéro de dépôt: 01983668.3
(22) Date de dépôt: 31.10.2001
(51) Int. Cl.: G07F 7/10

(54) **DEPLOIEMENT D'APPLICATION DEPUIS UNE CARTE A PUCE**
AUSLÖSUNG EINER ANWENDUNG AUF EINER CHIPKARTE
APPLICATION DEPLOYMENT FROM A SMART CARD

(30) Priorité: 06.11.2000 FR 0014363
(43) Date de publication de la demande: 27.08.2003
(73) Titulaire: GEMPLUS, 13420 Gémenos (FR)
(72) Inventeur: POTONNIEE, Olivier, F-13006 MARSEILLE (FR); PELLEGRINI, Marie-Claude, F-71130 CHASSY (FR)
(86) Numéro de dépôt international: PCT/FR2001/003389
(87) Numéro de publication internationale: WO 2002/037434

(56) Documents cités:
- EP-A- 1 039 719
- WO-A-00/08611
- US-A- 5 212 369
- US-A- 5 659 735

## Description

La présente invention concerne le déploiement d'une application depuis un premier moyen de traitement de données, tel qu'une carte à puce, dite également carte à microcontrôleur ou carte à circuit intégré, par l'intermédiaire d'un deuxième moyen de traitement de données, tel qu'un terminal d'accueil de la carte à puce, dans un contexte étendu et hétérogène. Dans ce contexte, l'application est composée de composants logiciels dispersés dans un réseau de télécommunication et doit pouvoir être exécutée à partir de terminaux hétérogènes ayant des caractéristiques matérielles et logicielles différentes, tels qu'un terminal radiotéléphone mobile, un assistant électronique personnel et un ordinateur personnel. Les terminaux hétérogènes diffèrent par exemple par leurs systèmes d'exploitation et leurs caractéristiques de codage de données et de communication.

Actuellement, des usagers accèdent à diverses applications à travers des réseaux de télécommunication, notamment le réseau Internet, quasiment à l'aide de n'importe quel terminal parmi divers terminaux hétérogènes, depuis leurs bureaux, leurs domiciles, ou des bornes d'accès publiques. Malheureusement, les applications ne sont pas capables de se configurer automatiquement en fonction de.caractéristiques personnelles à l'usager et il est nécessaire de reconfigurer le terminal de l'usager en fonction de l'application choisie. Pour exécuter correctement les applications, le terminal doit disposer de données de service relatives à l'application à exécuter et aux serveurs distants offrant ces applications, et de données individuelles confidentielles propres à chaque usager et personnalisant l'accès à une ou plusieurs applications. Lorsque les usagers sont sédentaires ces informations sont généralement statiques sur leurs terminaux. En revanche, lorsque les usagers sont itinérants, la carte à puce offre un support autonome, sûr et portable pour fournir ces données aux terminaux que l'usager est susceptible d'utiliser.

Par ailleurs, les fournisseurs d'applications ont intérêt à ce que leurs applications soient utilisables depuis un très grand nombre de terminaux. Une application doit donc être capable de s'adapter au terminal dans lequel elle est exécutée. Par exemple, une application donnée présente une interface graphique complexe à base de fenêtres dans un ordinateur personnel, et de simples menus textuels dans un radiotéléphone mobile, ou établit une communication audio ou vidéo en fonction du débit offert par le réseau.

L'adaptabilité des applications distribuées à leur contexte d'exécution et aux besoins de l'usager devient ainsi une nécessité (cf. article intitulé "Adaptabilité des applications pour des usagers mobiles", Michel RIVEILL et al., OCM'2000, Objets Composants Modèles, 8 Mai 2000). Il est donc nécessaire de déployer des applications de service en fonction du type du terminal et d'une personnalisation de configuration pour l'usager. Cette souplesse requise est obtenue par une architecture modulaire de chaque application. Chaque application est conçue comme un graphe de composants interconnectés par des connexions. Le déploiement de l'application crée des instances de ces composants en fonction du contexte d'exécution et de caractéristiques personnelles.

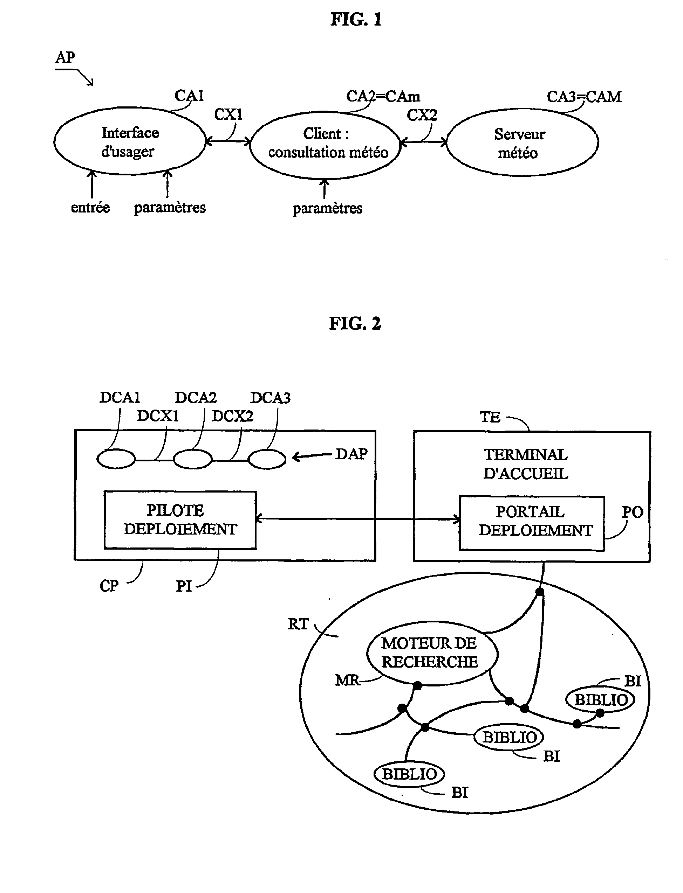

Comme montré aux figures 1 et 2, il est connu de définir une application dans une carte à puce, ou tout autre objet électronique portable présentant une capacité de mémoire relativement faible, par un descripteur DAP d'une application AP identifiant des éléments essentiels de l'application, tels que les composants logiciels CA de l'application et des connexions CX entre ces composants deux à deux. En général, une application comprend au moins trois composants CA1, CA2 et CA3 et au moins deux connexions CX1 et CX2 interconnectant deux à deux les composants CA1 et CA2 et les composants CA2 et CA3.

Un composant CA est une unité de traitement logiciel encapsulant des fonctionnalités, assez petite pour que l'on puisse la créer et la maintenir, et assez grande pour que l'on puisse l'installer et en assurer le support. Les propriétés fonctionnelles d'un composant sont les possibilités de traitement offertes par le composant et sont programmées et invariantes quel que soit le contexte. Le composant possède également des propriétés non-fonctionnelles qui représentent des aspects systèmes liés à l'implantation du composant, tels que transaction, sécurité, persistance, tolérance aux fautes, et qui sont variables en fonction du contexte et de l'application. La séparation entre propriétés fonctionnelles invariables et non-fonctionnelles variables permet d'exécuter le composant de manière différente sur une plate-forme d'exécution. Le composant est également doté d'interfaces de communication pour qu'il puisse coopérer avec d'autres composants et ainsi présenter son comportement à ces autres composants. En pratique, un composant logiciel peut être implanté sur n'importe quel site d'un réseau de télécommunication RT.

Une connexion définit les relations entre les interfaces de communication de deux composants. Des paramètres des connexions de l'application sont également adaptés au contexte de la plate-forme d'exécution.

Au niveau de la carte à puce CP, le descripteur d'application DAP ne contient pas l'élément lui-même, le composant logiciel CA ou la connexion CX, mais un descripteur DCA, DCX de l'élément CA, CX contenant des propriétés et des paramètres de l'élément le définissant et permettant de le retrouver parmi une multitude d'éléments.

Les propriétés du descripteur d'un élément sont fixées une fois pour toutes par le fournisseur de l'application qui spécialise l'élément, composant ou connexion, afin de satisfaire les besoins de l'application et de l'usager selon les caractéristiques d'abonnement. Elles indiquent les caractéristiques de la plate-forme sur laquelle l'élément peut être exécuté, ainsi que les besoins systèmes nécessaires à l'exécution. Par exemple, une propriété est le type ou l'adresse d'un élément qui est associé à chaque élément et utilisé pour la recherche du code ou de l'implantation de l'élément, ou est intimement liée à l'application ou à un type d'application, comme la propriété "numéro de compte" associée à un composant gestionnaire de compte bancaire. Ces propriétés sont, selon la technique antérieure, figées lors de la souscription au service correspondant à l'application par l'usager de la carte à puce, et ne sont accessibles qu'en lecture seule.

D'autres propriétés, dites paramètres, sont de préférence personnalisées par l'usager et peuvent être modifiées à tout instant. Par exemple, un paramètre a pour valeur la monnaie d'affichage d'un montant, ou bien une panoplie de couleurs pour l'affichage de pages sur un écran, ou bien encore la valeur du débit ou d'une caractéristique de transmission dans une connexion.

L'ensemble des composants et connexions constituant une application, avec les valeurs de ces propriétés et paramètres, définit un profil de l'application. Ainsi deux usagers différents peuvent avoir des profils d'application différents à cause des paramètres des applications définis par les usagers avec des valeurs différentes. Réciproquement, un seul usager peut configurer une application suivant plusieurs profils différents. Les profils d'une application sont ainsi définis soit par l'usager, soit automatiquement en fonction du contexte d'utilisation de l'application, qui peut dépendre notamment du terminal d'accueil et particulièrement du système d'exploitation implémenté dans celui-ci. Ainsi, lors du déploiement de l'application, certaines valeurs des paramètres d'un composant dépendent notamment du type, du nom et de la localisation du terminal.

Chaque descripteur d'une application est représenté sous la forme d'un graphe d'objet en langage orienté objet, par exemple le langage JAVA (marque déposée). Les descripteurs des applications dans une carte à puce multi-applications sont réunis dans une applet qui fait office d'un serveur de descripteur créant l'arborescence des objets représentant les composants et les connexions des descripteurs. Selon un autre exemple, les descripteurs des applications sont écrits avec le langage XML (Extensible Markup Langage).

Au serveur de descripteurs constituant l'applet est associé un client, appelé pilote de déploiement PI (en anglais bootstrap) qui constitue au sein de la carte à puce CP une application pour configurer l'application sélectionnée en fonction de son descripteur. Le pilote gère le déploiement d'éléments de l'application sélectionnée, après l'introduction de la carte CP dans le terminal d'accueil TE. En groupant le serveur de descripteurs et le pilote de déploiement dans la carte, la confidentialité des descripteurs est assurée si bien que la lecture des descripteurs par le pilote de déploiement constituant un client connu ne nécessite pas d'authentification. En revanche, le pilote de déploiement authentifie chaque client qui l'interroge avant de mettre à sa disposition l'ensemble des méthodes de l'applet. Lorsque l'usager a sélectionné une application AP, le pilote de déploiement PI informe le serveur de descripteurs qui considère alors toutes les requêtes qui lui sont adressées comme étant relatives au descripteur DAP de l'application sélectionnée. Le pilote PI traite ainsi un ou plusieurs déploiements d'application.

Comme déjà dit, un élément d'application, composant ou connexion, est configuré en fonction du contexte de l'application, c'est-à-dire des propriétés matérielles et logicielles de la plate-forme où sera exécutée l'application, et de paramètres choisis par l'usager et personnalisant l'application. Toutes ces informations sont regroupées dans le descripteur de l'élément d'application afin que le pilote de déploiement PI filtre les informations contenues dans le descripteur de l'élément en fonction du contexte de l'application et des paramètres de personnalisation de l'usager.

Le pilote de déploiement PI localisé dans la carte à puce CP transmet des commandes de déploiement à un portail de déploiement PO qui est un élément applicatif implémenté dans le terminal d'accueil TE. Le portail a pour principal rôle de recevoir les commandes de déploiement et de les ré-émettre vers la plate-forme de déploiement afin d'installer l'application sélectionnée. Ainsi le portail de déploiement a principalement une fonction d'information de la carte à puce sur l'environnement dans lequel l'installation et l'exécution de l'application sélectionnée doivent être faites, et une fonction de communication avec la carte afin de recevoir diverses commandes de déploiement de l'application sélectionnée.

Selon la technique antérieure, le déploiement d'une application est synchrone, c'est-à-dire les commandes élaborées par le pilote de déploiement PI sont transmises séquentiellement, les unes après les autres, respectivement pour l'installation des éléments de l'application, puis pour le paramètrage des éléments de l'application.

Le déploiement est réalisé par le pilote de déploiement à partir du descripteur DAP de l'application sélectionnée AP afin qu'un dialogue soit établi entre le pilote de déploiement PI dans la carte à puce CP et le portail de déploiement PO dans le terminal d'accueil TE. Le portail peut contenir un moteur de recherche d'éléments, ou être en liaison avec un ou plusieurs moteurs de recherche d'éléments MR, comme montré à la figure 2. Chaque moteur de recherche MR constitue un annuaire d'éléments d'application pour référencer et rechercher des éléments d'application dans des bibliothèques d'éléments d'application BI à travers le réseau de télécommunication RT. Chaque élément dans une bibliothèque est mémorisé avec son descripteur et géré par le concepteur de l'élément.

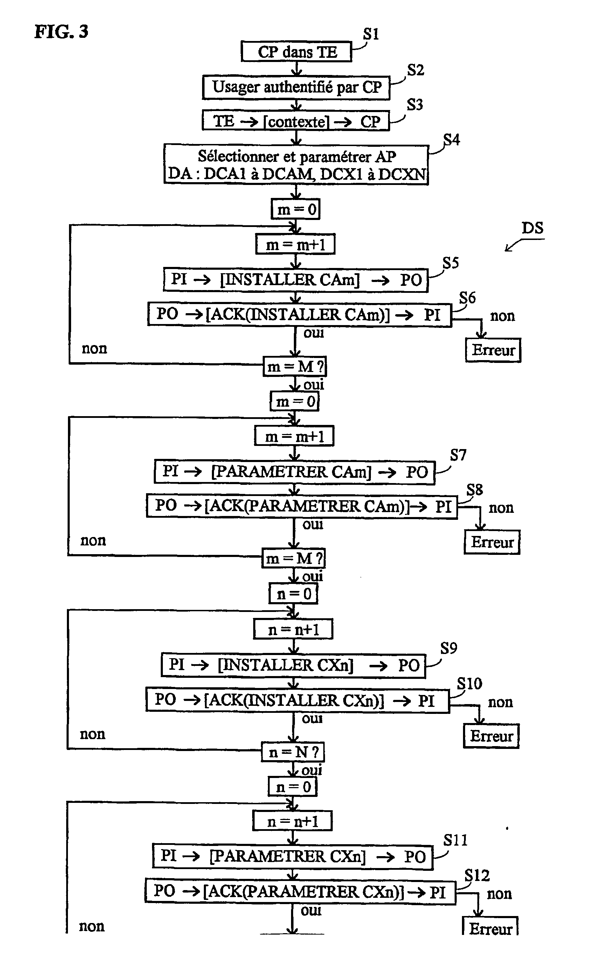

Comme montré à la figure 3, préalablement au déploiement synchrone DS proprement dit d'une application sélectionnée AP, l'usager introduit la carte à puce CP dans la fente de lecteur du terminal d'accueil TE (étape S1). Après l'introduction de la carte à puce, celle-ci dialogue avec le terminal d'accueil pour authentifier l'usager, connaître le contexte de la plate-forme d'exécution de l'application constituée essentiellement par le terminal TE, et l'application sélectionnée.

L'authentification consiste par exemple à vérifier l'identité de l'usager au moyen d'un code confidentiel PIN saisi par le terminal (étape S2).

Le contexte extérieur à l'environnement matériel de la carte à puce est défini par des propriétés de la plate-forme d'exécution qui sont transmises par le terminal TE à la carte à puce CP (étape S3). Les propriétés du contexte d'exécution fournies par le terminal sont par exemple le type du terminal d'accueil utilisé TE, le nom du terminal, un certificat ou clé d'identification du terminal, la localisation du terminal dans le réseau de télécommunication et une date de fabrication du terminal. Ces propriétés permettent au pilote de déploiement PI de limiter la quantité de données qu'il transmet au portail de déploiement PO et ainsi de minimiser la durée du déploiement. Ces caractéristiques contextuelles peuvent être utilisées aussi bien dans des expressions conditionnelles, par exemple "si le nom du terminal est 'mamachine'" que dans des valeurs de propriété de composant d'application : par exemple, la propriété "localisation" d'un composant d'interface d'usager a la valeur nom-du-terminal. Lors du déploiement suivant, ces références aux propriétés contextuelles sont remplacées par la valeur fournie par un autre terminal d'accueil TE.

L'usager sélectionne une application AP (étape S4) classiquement par exemple dans un menu de présentation de diverses applications dont les déploiements peuvent être commandés par la carte à puce CP. Après la sélection de l'application AP, le terminal TE selon le contexte et de préférence l'usager paramètrent l'application, c'est-à-dire paramètrent certains des ou éventuellement tous les descripteurs DCA et DCX des composants et des connexions de l'application sélectionnée qui sont susceptibles d'être paramétrés. Le paramétrage par l'usager est classique à l'aide de menus arborescents demandant des valeurs de paramètre.

A la suite de ces étapes d'initialisation S1 à S4, le déploiement synchrone DS de l'application sélectionnée AP est exécuté en fonction des descripteurs de composant DCA1 à DCAM et des descripteurs de connexion DCX1 à DCXM dans le descripteur paramétré DAP de l'application sélectionnée AP. Au cours de ce déploiement des commandes essentiellement selon quatre types sont retransmises par le pilote de déploiement PI au portail de déploiement PO.

Une première commande [INSTALLER CAm] contenant les propriétés du descripteur respectif DCAm (étape S5) ordonne l'installation du composant CAm de l'application sélectionnée qui, après complète exécution, est confirmée par un message d'acquittement [ACK (INSTALLER CAm)] transmis par le portail PO au pilote PI, avec 1 ≤ m ≤ M. En réponse à la commande d'installation, le portail PO commande une recherche du composant désigné CAm à travers au moins un moteur de recherche MR dans au moins une bibliothèque de composant BI de manière à récupérer une référence du composant dans le terminal TE, comme si le composant distant CAm était installé dans le terminal.

Comme indiqué schématiquement à l'étape S6, le déploiement est arrêté à la suite d'un message d'erreur transmis par le pilote PI au terminal TE si l'acquittement de la commande d'installation du composant CAm n'est pas reçue par le pilote PI à l'expiration d'une temporisation prédéterminée. D'autre part, tant que l'acquittement de l'installation du composant CAm n'est pas reçu par le pilote PI, celui-ci ne commande pas l'installation du composant suivant CA(m+1).

Après l'installation de tous les composants CA1 à CAM de l'application sélectionnée selon les étapes itératives S5 et S6, le pilote PI transmet successivement des deuxièmes commandes [PARAMETRER CAm] au fur et à mesuré de leurs acquittements pour paramétrer successivement les composants installés. Le, paramétrage du composant CAm est effectué en fonction des paramètres contenus dans le descripteur DCAm et dépendant du contexte d'exécution de l'application défini à l'étape S3 et éventuellement de sélections de l'usager à l'étape S4. Comme montré à des étapes itératives S7 et S8, chaque commande [PARAMETRER CAm] contenant les paramètres du composant CAm et transmise par le pilote PI au portail PO ne peut être suivie que par un message d'acquittement respectif [ACK(PARAMETRER CAm)] reçu par le pilote PI. Par conséquent les composants CA1 à CAM de l'application sont paramétrés successivement, le paramétrage d'un composant CAm ne pouvant être effectué qu'après le paramétrage du composant précédent CA(m-1). Le défaut de réception du message d'acquittement [ACK(PARAMETRER CAm)] par le pilote PI à l'étape S6, après l'émission de la commande de paramétrage correspondante pendant une temporisation prédéterminée, entraîne également l'arrêt du déploiement synchrone DS par un message d'erreur transmis par le pilote PI au terminal TE.

Après le paramétrage de tous les composants de l'application, le déploiement continue avec des étapes itératives S9 et S10 pour installer successivement les N connexions CX1 à CXN de l'application sélectionnée, puis, lorsque toutes les connexions ont été installées, avec les étapes itératives S11. et S12 pour paramétrer successivement les connexions installées CX1 à CXN. De manière similaire à l'installation ou le paramétrage d'un composant, l'installation ou le paramétrage d'une connexion CXn intervient en réponse à une commande [INSTALLER CXn] ou [PARAMETRER CXn] contenant les propriétés ou les paramètres du descripteur DCX et transmise par le pilote PI au terminal TE, et ne peut être effectué qu'après la réception d'un message d'acquittement respectif de l'installation ou du paramétrage de la connexion précédente CX(n-1). A défaut de la réception de ce message d'acquittement pendant une temporisation prédéterminée, un message d'erreur est transmis par le pilote PI au terminal TE pour arrêter le déploiement.

Finalement, lorsque tous les composants et les connexions de l'application sélectionnée AP sont installés et paramétrés, l'application déployée est adaptée au terminal TE afin qu'elle soit exécutée à l'étape S13. Le démarrage de l'application est effectué par une commande d'exécution (RUN) qui contient le nom du composant de l'application sélectionnée déterminant le point d'entrée de l'application, généralement un composant d'interface d'usager.

Par exemple, comme montré à la figure 1, le premier composant CA1 est une interface d'usager contenant le point d'entrée de l'application, qui a besoin d'un service de consultation, par exemple d'un service de consultation de météo, géré dans le deuxième composant CA2 de manière à récupérer des informations de prévisions météorologiques dans le troisième composant, CA3 constitué par l'un de plusieurs serveurs de prévisions météorologiques propres à des régions. Le composant d'interface d'usager CA1 est localisé dans le terminal d'accueil TE, tandis que les deux autres composants CA2 et CA3 sont localisés dans des sites différents. Seuls les deux premiers composants CA1 et CA2 sont paramétrables. Quel que soit le type de terminal, tel qu'un radiotéléphone, un assistant personnel ou ordinateur personnel, l'application peut être exécutée.

Le déploiement uniquement de manière synchrone présente, à cause de la succession de commandes acquittées selon un ordonnancement prédéterminé, une durée d' exécution d'autant plus longue et un appel à des ressources du réseau de communication RT utilisées par le terminal d'accueil d'autant plus fréquent que l'installation et/ou le paramétrage de certains composants est long.

En outre, ce seul déploiement ne permet pas d'adapter la configuration des composants et des connexions de l'application sélectionnée au contexte d'exécution de l'application, mise à la disposition du terminal. Par exemple, un descripteur de composant ne sera installé que si un composant strictement défini par ce descripteur est rencontré dans les bibliothèques consultées, alors que l'usager aurait été satisfait par un composant présent dans une bibliothèque et ayant des propriétés et/ou paramètres très proches du composant recherché.

L'invention a donc pour objectif de remédier aux inconvénients précités du déploiement des applications à éléments répartis selon la technique antérieure de manière à adapter le déploiement au contexte environnant la plate-forme d'exécution de l'application et améliorer les conditions d'exécution de l'application.

A cette fin, un procédé pour déployer une application composée de plusieurs éléments distants répartis, depuis un premier moyen de traitement de données contenant des descripteurs des éléments, à travers un deuxième moyen de traitement de données relié à des moyens d'implantation des éléments pour exécuter l'application déployée, est caractérisé en ce qu'après une transmission de caractéristiques du contexte d'exécution de l'application depuis le deuxième vers le premier moyen de traitement, il comprend une sélection de l'un de plusieurs déploiements de l'application.

Par exemple, les premier et deuxième moyens de traitement sont inclus dans une carte à microcontrôleur et un terminal d'accueil de la carte, respectivement.

Selon l'invention, le déploiement est essentiellement asynchrone, ou bien essentiellement synchrone, le caractère synchrone pouvant être choisi par défaut parce qu'il est compatible avec tous les moyens de traitement actuels.

Au cours du déploiement asynchrone, le premier moyen de traitement commande d'abord sensiblement en parallèle des installations de tous les éléments indépendants d'autres installations respectivement en fonction des descripteurs des éléments indépendants, puis commande sensiblement en parallèle, indépendamment de tout ordonnancement des éléments, des installations d'éléments dépendants chacun d'au moins une installation d'un élément indépendant respectif respectivement en réponse chacune à l'acquittement de l'installation dudit au moins élément indépendant respectif et en fonction des descripteurs des éléments dépendants.

Bien souvent, un ou plusieurs éléments de l'installation sont paramétrables. Ainsi, au cours du déploiement asynchrone, le premier moyen de traitement commande également, sensiblement en parallèle, indépendamment de tout ordonnancement des éléments, un paramétrage d'au moins un élément indépendant en réponse à un acquittement d'installation dudit élément indépendant et en fonction d'au moins un paramétrage contenu dans le descripteur dudit élément indépendant, un élément dépendant au moins de l'installation de l'élément indépendant paramétré étant installé en réponse au moins à l'acquittement de paramétrage dudit élément indépendant paramétré, ou commande également, sensiblement en parallèle, indépendamment de tout ordonnancement des éléments, un paramétrage d'au moins un élément dépendant en réponse à un acquittement d'installation dudit élément dépendant et en fonction d'au moins un paramètre contenu dans le descripteur dudit élément dépendant.

En revanche, au cours du déploiement synchrone déjà décrit en référence à la figure 3, le premier moyen de traitement commande séquentiellement, les uns après les autres, des installations de tous les éléments indépendants d'autres installations respectivement en fonction des descripteurs des éléments indépendants, puis des éventuels paramétrages d'éléments indépendants respectivement en réponse à des acquittements des installations de ces éléments indépendants et en fonction de paramètres contenus dans les descripteurs de ces éléments indépendants, puis des installations de tous les éléments dépendants chacun d'au moins un élément indépendant respectif respectivement en réponse chacune à un acquittement de l'éventuel paramétrage dudit au moins élément indépendant respectif et en fonction des descripteurs des éléments dépendants, et des éventuels paramétrages d'éléments dépendants respectivement en réponse à des acquittements des installations des éléments dépendants et en fonction des éventuels paramètres contenus dans les descripteurs des éléments dépendants.

Comme on le verra ci-après, par exemple les éléments indépendants sont des composants logiciels et les éléments dépendants sont des connexions chacune entre deux composants logiciels respectifs, et/ou des composants logiciels.

L'un des déploiements asynchrone ou synchrone peut comporter l'installation d'au moins un élément de l'application ayant au moins une propriété présentant une dégradation, sélectionnée préalablement, ou bien l'installation d'au moins un élément de l'application ayant une propriété associée à un poids, sélectionnée préalablement, ou bien encore l'installation de la première trouvée de plusieurs configurations sélectionnées préalablement d'au moins un élément de l'application, les configurations d'élément ayant au moins une valeur de propriété différente.

L'invention concerne également un objet électronique portable du type carte à microcontrôleur, comprenant le premier moyen de traitement de données pour la mise en oeuvre du procédé de déploiement d'application conforme à l'invention.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1, déjà commentée, montre la modularité d'une application en trois composants par exemple ;
- la figure 2, déjà commentée, est un bloc-diagramme schématique des moyens mis en oeuvre dans un réseau de télécommunication pour le déploiement d'une application d'éléments distants répartis, selon la technique antérieure et selon l'invention ;
- la figure 3, déjà commentée, est un algorithme de configuration d'une application avec un déploiement synchrone, selon la technique antérieure
- la figure 4 est un algorithme de configuration et de sélection de déploiement d'une application selon l'invention ; et
- la figure 5 est un algorithme de déploiement asynchrone d'une application sélectionnée, selon l'invention.

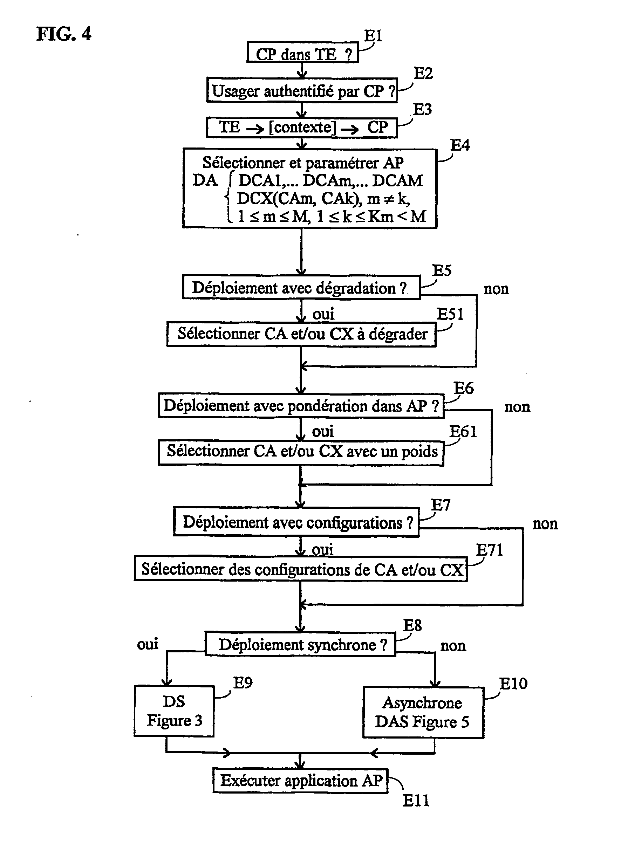

En référence à la figure 4, la configuration et la sélection d'un déploiement d'une application AP selon l'invention, composée de plusieurs composants distants répartis CA1 à CAM et de plusieurs connexions CX(CAm, CAk), avec m≠k, 1 ≤ m ≤ M et 1 ≤ k ≤ Km < M entre des composants deux à deux CAm et CAk comme montré à la figure 1, comprend des premières étapes E1 à E4 respectivement analogues aux étapes S1 à S4 de la figure 3 déjà décrites. Les étapes E1 à E4 sont ainsi relatives à l'introduction de la carte à puce multi-applications CP dans le terminal d'accueil TE, tel qu'un terminal radiotéléphonique mobile, un assistant électronique personnel ou un ordinateur personnel, à l'authentification de l'usager par la carte à puce CP par l'intermédiaire d'un code confidentiel ou d'une empreinte biométrique saisie par le terminal TE, à la transmission de caractéristiques du contexte d'exécution depuis le terminal TE vers la carte à puce CP, et à la sélection d'une application AP par l'usager parmi toutes les applications dont les descripteurs DAP sont mémorisés dans la carte à puce CP et le cas échéant au paramétrage des descripteurs DCA et DCX des éléments, composants et connexions, de l'application sélectionnée AP par l'usager au moyen de valeurs de paramètre.

Puis selon l'invention, au moins après la transmission du contexte d'exécution de l'application depuis le terminal TE vers la carte à puce CP à l'étape E3 si la carte à puce ne contient qu'une application, le procédé propose plusieurs choix de déploiement à des étapes E5, E6, E7 et E8 selon une réalisation complète de l'invention, bien qu'en variante, le procédé ne peut comprendre que l'une ou quelques unes des étapes E5 à E8. En particulier, aux étapes E5, E6 et E7, l'une de valeurs d'une propriété ou l'une de plusieurs propriétés dans le descripteur d'au moins un élément CA, CX de l'application est sélectionnée par l'usager possesseur de la carte à puce CP, ou par la carte à puce CP en fonction de caractéristiques du contexte d'exécution de l'application transmis par le terminal TE.

A l'étape E5, l'usager décide que l'application sélectionnée soit dégradée au moins partiellement. Sinon, le procédé passe à l'étape E6.

Une dégradation consiste à l'étape E51 à sélectionner au moins l'un des éléments de l'application sélectionnée pouvant être dégradée. La dégradation d'un composant CAm ou d'une connexion CX(CAm, CAk) consiste en une perte de qualité ou de performance du résultat attendu produit par le composant ou la connexion. Cette dégradation est introduite lors de l'installation du composant ou de la connexion au cours de l'étape suivante de déploiement proprement dit E9 ou E10.

Par exemple, la dégradation d'un composant de type calculette concerne, comme paramètre, le nombre de chiffres suivant la virgule du résultat décimal d'un calcul prédéterminé. Si l'usager a paramétré à l'étape E4 que le résultat du calcul contiendrait P chiffres après la virgule, il peut accepter à l'étape E51 que le résultat et par conséquent le calcul soit effectué uniquement avec Q chiffres après la virgule, avec Q<P. Lors de l'installation du composant de calcul, le moteur de recherche MR recherche tous les composants de calcul pouvant calculer avec des nombres décimaux comprenant Q à P chiffres après la virgule, et le pilote PI ne maintient l'installation que du composant trouvé présentant des nombres décimaux à calculer ayant le plus grand nombre de chiffres après la virgule. si aucun composant de calcul n'est trouvé avec des nombres décimaux ayant au moins Q chiffres après la virgule, le pilote PI émet un message d'erreur qui stoppe le déploiement de l'application.

L'étape E6 est relative à la sélection d'une pondération sur la valeur d'au moins une propriété dans au moins l'un des éléments de l'application sélectionnée AP. Si l'usager ne souhaite aucune pondération, le procédé passe à l'étape suivante E7.

Lorsque la pondération est sélectionnée, l'usager sélectionne l'une des pondérations associées à au moins l'un des composants et connexions de l'application sélectionnée à l'étape E61. La pondération a pour objectif d'assister le, pilote de déploiement PI dans sa réaction aux erreurs et de permettre à la carte à puce d'être intrinsèquement évolutive au cours du temps.

Préalablement, une ou plusieurs propriétés dans un ou plusieurs descripteurs de composant DCA ou de connexion DCX sont affectées de poids afin que l'usager configure le déploiement préalablement à l'exécution du déploiement proprement dit de l'application comprenant au moins les composants et/ou connexions affectés d'un poids sélectionné. Les poids attribués aux différentes valeurs des propriétés de certains éléments de l'application permettent au pilote de déploiement PI de choisir une configuration de l'application selon un degré de satisfaction de l'usager.

Selon l'exemple précédent, il est supposé que PP et PQ désignent des poids faible et élevé attribués à des calculs effectués avec des nombres décimaux ayant P chiffres et Q chiffres après la virgule, avec P>Q. Si l'usager recherche un déploiement rapide, il sélectionne un poids élevé tel que PQ. Au contraire si l'usager recherche un résultat de calcul plus précis et donc un déploiement plus lent, il sélectionne un poids faible, tel que PP.

Selon un autre exemple, un poids peut être affecté en fonction de la durée plus ou moins longue de l'exécution d'un composant ou de la durée d'une connexion entre deux composants.

De préférence, le poids d'une propriété pondérée est corrigé en fonction de critères de qualité prédéterminés sur au moins le déploiement précédent de l'application sélectionnée. Par exemple, le poids d'une propriété pondérée est revalorisé en fonction de la moyenne pondérée de mesures de qualité effectuées lors du déploiement précédent ou lors d'un nombre prédéterminé de déploiements précédents. La pondération est ainsi conditionnée par l'historique des déploiements précédents.

A l'étape E7, l'usager décide de sélectionner une configuration d'au moins une propriété de l'un des composants ou l'une des connexions de l'application sélectionnée AP. Sinon, le procédé passe à l'étape E8.

Par exemple, un composant de l'application présente des configurations qui diffèrent par quelques propriétés différentes. Le composant peut être un moyen de calcul en nombre décimaux ayant P et Q chiffres après la virgule selon deux configurations, ou bien une interface graphique présentant des combinaisons de couleur selon deux configurations. A l'étape E71, des configurations d'au moins un composant ou une connexion sélectionné de l'application, et plus généralement de plusieurs éléments sélectionnés de l'application présentant des configurations, sont sélectionnées. L'installation de la première configuration trouvée parmi les configurations sélectionnées de chacun des éléments recherchés par le moteur de recherche MR est alors maintenue par le pilote de déploiement PI qui ignore les autres configurations par une commande de destruction spéciale (Abort) de ces configurations supplémentaires. Plus précisément, après réception des acquittements des installations de ces différentes configurations d'élément, le pilote de déploiement sélectionne a posteriori l'une de ces configurations, par exemple en ne retenant que la première qui a été reçue, ou en ne retenant celle qui satisfait un critère de qualité prédéterminé, et en détruisant les autres configurations installées.

Lorsque plusieurs configurations d'un composant ou d'une connexion sont sélectionnées à l'étape E71, le pilote de déploiement PI transmet successivement plusieurs commandés [INSTALLER] contenant respectivement les descripteurs de ces différentes configurations de l'élément lors du déploiement ci-après.

Puis à l'étape E8, le caractère synchrone ou asynchrone du déploiement est sélectionné.

Si le déploiement synchrone est choisi, celui-ci est développé à l'étape E9 selon les étapes S5 à S12 déjà décrites selon la figure 3.

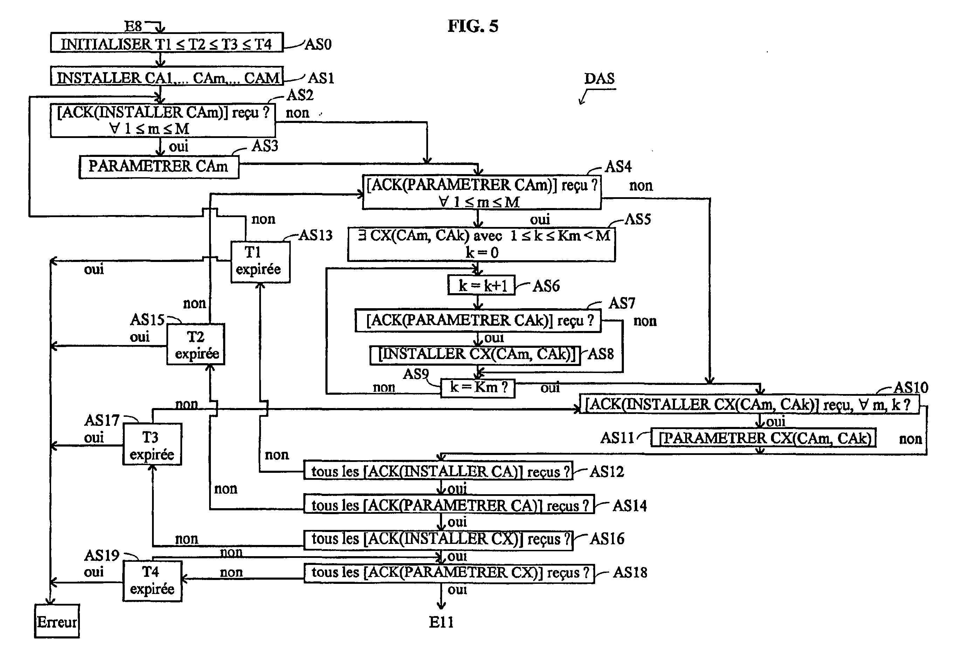

Si le déploiement sélectionné est asynchrone, celui-ci est développé selon des étapes AS0 à AS19 décrites ci-après selon la figure 5.

Quel que soit le caractère du déploiement choisi, les descripteurs des éléments de l'application sélectionnée dans les commandes comprennent des caractéristiques notamment de propriété qui ont été sélectionnées aux étapes précédentes E5 à E71. Ces caractéristiques concernant la dégradation, la pondération et des configurations d'élément ainsi que le caractère synchrone ou asynchrone du déploiement peuvent être sélectionnées totalement par l'usager ou sélectionnées par le pilote de déploiement PI éventuellement à l'aide d'informations fournies par l'usager et/ou par le terminal d'accueil TE en fonction de caractéristiques du contexte transmises à l'étape E3, ou peuvent être sélectionnées pour partie par l'usager et pour partie par le terminal TE.

En variante, s'agissant du caractère synchrone ou asynchrone, le pilote PI choisit par défaut le caractère synchrone pour que l'usager ou le terminal TE n'intervienne pas, en forçant le déploiement à ce qu'il soit synchrone. Ce choix par défaut du déploiement synchrone permet de déployer l'application sélectionnée sur tous les terminaux, y compris ceux ne disposant pas de moyen pour déclencher plusieurs commandes pendant le traitement de la commande courante.

Après le déploiement à l'étape E9 ou E10, l'application sélectionnée déployée AP est exécutée à l'étape E11 à partir du terminal TE.

En référence à la figure 5, le déploiement asynchrone DAS comprend essentiellement des étapes AS0 à AS19. Pour le déploiement asynchrone, le pilote de déploiement PI commande en parallèle les installations et les paramétrages des différents éléments composant l'application sélectionnée AP. Le déploiement asynchrone commence naturellement par l'installation d'éléments, tels que les composants, dont l'installation est indépendante d'autre installations, et autorise l'installation d'éléments, tels que les connexions, dépendant de l'installation d'éléments indépendants, tels que deux composants, qu'après l'installation des composants correspondant. Le paramétrage d'un élément susceptible d'être paramétré est évidemment exécuté lorsque l'élément est installé ; dans la suite, il est supposé que tous les éléments de l'application sont paramétrés ; si un élément ne peut être paramétré, ou si aucun paramètre de cet élément n'a été sélectionné à l'étape E4, les étapes de paramétrage et d'acquittement de paramétrage pour cet élément sont alors supprimées.

A la différence du déploiement synchrone DS, le déploiement asynchrone DAS ne suit pas un ordonnancement prédéterminé des éléments composant l'application, mais déclenche un paramétrage ou une installation d'un élément déterminé seulement lorsque l'opération dont il dépend a été confirmée par un acquittement. Ainsi par exemple, un composant peut être paramétré avant un autre composant dont l'installation a été commandée en premier, ou bien une connexion peut être paramétrée avant que des composants aient été définitivement installés ou paramétrés.

Selon la réalisation illustrée, à une étape initiale AS0, quatre temporisations prédéterminées T1, T2, T3 et T4 sont déclenchées au début du déploiement asynchrone. Ces temporisations limitent respectivement la durée des installations des éléments indépendants, tels que les composants CA1 à CAM, de l'application sélectionnée, la durée du paramétrage des composants, la durée des installations des éléments indépendants, tels que les connexions CX(CAm, CAk), de l'application sélectionnée, et la durée du paramétrage des connexions, par rapport au début du déploiement asynchrone.

Puis le déploiement asynchrone proprement dit commence par les installations en parallèle de tous les composants CA1 à CAM. Chaque commande [INSTALLER CAm] contient le descripteur DCAm du composant respectif CAm de l'application sélectionnée AP et est transmise par le pilote de déploiement PI au portail de déploiement PO afin que le moteur de recherche MR recherche le composant CAm dans des bibliothèques de composants BI.

Puis le pilote de déploiement traite en parallèle trois groupes d'étapes AS2-AS3, AS4-AS9 et AS10-AS11 concernant le paramétrage d'un composant quelconque CAm, l'installation d'une connexion quelconque CX (CAm, CAk) et le paramétrage d'une connexion quelconque.

En réponse à un acquittement d'installation [ACK(INSTALLER CAm)] d'un composant quelconque CAm transmis par le portail PO à l'étape AS2 et en fonction des paramètres dans le descripteur DCAm du composant CAm, le pilote PI commande le paramétrage du composant quelconque CAm à l'étape AS3. Si le pilote PI n'a reçu aucun acquittement d'installation de composant à l'étape AS2, il passe directement à l'étape suivante AS4.

Pour établir une commande [INSTALLER(CX(CAm, CAk))] pour l'installation d'une connexion CX entre des composants CAm et CAk, avec 1 ≤ m ≤ M et 1 ≤ k ≤ Km < M, à l'étape AS8, le pilote de déploiement PI doit avoir reçu des acquittements [ACK (PARAMETRER CAm)] et [ACK(PARAMETRER CAk)] des installations des composants CAm et CAk constituant des éléments dont la connexion CX dépend, aux étapes AS4 et AS7. Ainsi, en réponse à l'acquittement du paramétrage d'un composant quelconque CAm à l'étape AS4, le pilote vérifie à l'étape suivante AS5 s'il existe encore une connexion non installée dépendant du composant CAm et d'un composant CAk avec m≠k. En désignant Km<M le nombre de connexions avec le composant CAm dans l'application sélectionnée, le pilote incrémente l'indice k à l'étape AS6 de manière à vérifier s'il a reçu un acquittement de paramétrage du composant CAk à l'étape AS7. La connexion entre les composants CAm et CAk est alors installée à l'étape AS8 si le composant CAk a été paramétré, c'est-à-dire en réponse à l'acquittement de paramétrage du composant CAk. Lorsque le pilote de déploiement PI a analysé toutes les connexions avec le composant CAm à l'étape AS9, ou lorsque le pilote n'a pas reçu d'acquittement de paramétrage de composant à l'étape AS4, le déploiement asynchrone passe à l'étape AS10.

A l'étape AS10, le pilote PI vérifie s'il a reçu un acquittement [ACK (INSTALLER CX (CAm, CAk))] relatif à l'installation CX(CAm, CAk) et transmis par le portail PO quels que soient les indices m et k des composants reliés par cette connexion. En fonction des paramètres contenus dans le descripteur de cette connexion et en réponse à l'acquittement de l'installation de cette connexion à l'étape AS10, le pilote établit une commande [PARAMETRER CX(CAm, CAk)] pour commander le paramétrage de la connexion à l'étape AS11. Puis le pilote passe à l'étape suivante AS12 après le paramétrage de la connexion, ou s'il n'a pas d'acquittement d'installation de connexion à l'étape AS10.

Comme cela apparaît à la figure 5, les étapes AS2, AS4 et AS10 se succèdent si le pilote de déploiement PI n'a aucun acquittement à traiter, ou bien l'un des acquittements précédents est traité, indépendamment de l'indice in ou des indices m et k et indépendamment d'un quelconque ordonnancement des éléments, tels que composants et connexions, de l'application sélectionnée AP.

L'algorithme de déploiement asynchrone illustré à la figure 5 se termine par quatre paires d'étapes AS12-AS13, AS14-AS15, 1S16-AS17 et AS18-AS19 qui permettent des itérations de parties de l'algorithme et une limitation de la durée du déroulement de l'algorithme.

Si à l'étape AS12, le pilote de déploiement PI n'a pas reçu tous les acquittements [ACK(INSTALLER CA)] relatifs aux installations des composants de l'application sélectionnée, le procédé revient à l'étape AS2 pour le traitement d'un éventuel acquittement d'installation de composant si la durée du déploiement asynchrone DAS n'a pas excédé la temporisation T1 à l'étape AS13. Sinon, un message d'erreur est émis par le pilote pour arrêter le déploiement DAS lorsqu'au moins l'un des acquittements des installations des composants n'est pas reçu à l'expiration de la première temporisation prédéterminée T1.

Si tous les acquittements relatifs aux installations des composants ont été reçus par le pilote PI à l'étape AS12, celui-ci vérifie à l'étape AS14 si tous les acquittements [ACK(PARAMETRER CA)] relatifs aux paramétrages des composants de l'application sélectionnée ont été reçus. Si encore des acquittements de paramétrage de composants sont à traiter, le pilote revient à l'étape de paramétrage de composants AS4 lorsque la temporisation T2 n'a pas expiré à l'étape AS15. Sinon un message d'erreur est émis pour arrêter le déploiement asynchrone lorsqu'au moins l'un des acquittements des paramétrages des composants n'est pas reçu à l'expiration de la deuxième temporisation prédéterminées T2.

Lorsque tous les acquittements de paramétrage de composant ont été reçus à l'étape AS14, le pilote PI vérifie à l'étape AS16 que tous les acquittements relatifs aux installations des connexions de l'application sélectionnée ont été reçus. Sinon le procédé passe à l'étape de traitement d'acquittement d'installation de connexion à l'étape AS10 à condition que la temporisation T3 n'ait pas expiré à l'étape AS17. Dans le cas contraire, un message d'erreur arrêtant le déploiement asynchrone est émis par le pilote lorsqu'au moins l'un des acquittements des installations des connexions n'est pas reçu à l'expiration de la troisième temporisation prédéterminées T3.

Finalement, si tous les acquittements relatifs aux installations des connexions ont été reçus à l'étape AS16, le pilote vérifie que tous les acquittements [ACK(PARAMETRER CX)] relatifs aux paramétrages des connexions ont été reçus à l'étape AS18. Cette vérification est maintenue tant que la temporisation T4 n'a pas expiré à l'étape AS19. Sinon, un message d'erreur est émis par le pilote pour arrêter le déploiement asynchrone lorsqu'au moins l'un des acquittements des paramétrages des connexions n'est pas reçu à l'expiration de la temporisation prédéterminées T4.

Ainsi lorsque tous les acquittements d'installation et de paramétrage ont été reçus aux étapes AS12, AS14, AS16 et AS18, le pilote PI lance l'exécution de l'application sélectionnée ainsi déployée à l'étape E11.

En général, les temporisations T1, T2, T3 et T4 sont croissantes de la première vers la quatrième, bien que certaines d'entre elles peuvent être égales. En variante, seulement la temporisation T4 peut être prévue, ou bien seulement la temporisation T4 et l'une ou deux des temporisations T1, T2 et T3..

Bien que l'invention ait été décrite par rapport à des applications comprenant chacune que deux types d'éléments, à savoir des composants et des connexions entre ces composants, l'invention n'est pas limitée à ce type d'application et s'étend à d'autres applications comprenant plusieurs types d'éléments, tels que des éléments du type propriété globale. Une propriété globale concerne une propriété sur l'ensemble de l'application et est traitée par des commandes d'installation et de paramétrage dans les algorithmes de déploiement des figures 3 et 5, en tant qu'éléments indépendants d'autres éléments, comme un composant. En outre, un élément dépendant peut être un composant logiciel dont l'installation dépend d'au moins un autre composant logiciel.

## Revendications

1. - Procédé pour déployer une application (AP) composée de plusieurs éléments distants répartis (CA, CX), depuis un premier moyen de traitement de données (CP, PI) contenant des descripteurs (DCA, DCX) des éléments, à travers un deuxième moyen de traitement de données (TE, PO) relié à des moyens d'implantation des éléments (BI) pour exécuter l'application déployée, **caractérisé en ce qu'**après une transmission (E3) de caractéristiques du contexte d'exécution de l'application depuis le deuxième vers le premier moyen de traitement, il comprend une sélection (E5 à E8) de l'un de plusieurs déploiements de l'application.

2. - Procédé conforme à la revendication 1, selon lequel au moins l'un des déploiements est un déploiement asynchrone (DAS) au cours duquel le premier moyen de traitement (CP, PI) commande d'abord sensiblement en parallèle des installations (AS1) de tous les éléments (CA) indépendants d'autres installations respectivement en fonction des descripteurs des éléments indépendants, puis commande sensiblement en parallèle, indépendamment de tout ordonnancement des éléments, des installations (AS8) d'éléments (CX) dépendants chacun d'au moins une installation d'un élément indépendant respectif (CA) respectivement en réponse chacune.à l'acquittement de l'installation dudit au moins élément indépendant respectif et en fonction des descripteurs des éléments dépendants.

3. - Procédé conforme à la revendication 2, selon lequel le déploiement asynchrone est arrêté (AS13, AS17) lorsqu'au moins un acquittement (AS12) d'installation d'élément indépendant (CA) n'est pas reçu à l'expiration d'une première temporisation prédéterminée (T1) déclenchée au début du déploiement asynchrone, ou lorsqu'au moins un acquittement (AS16) d'installation d'élément dépendant (CX) n'est pas reçu à l'expiration d'une deuxième temporisation prédéterminée (T3) déclenchée au début du déploiement asynchrone.

4. - Procédé conforme à la revendication 2 ou 3, selon lequel, au cours du déploiement asynchrone (DAS), le premier moyen de traitement (CP, PI) commande également, sensiblement en parallèle, indépendamment de tout ordonnancement des éléments, un paramétrage (AS3) d'au moins un élément indépendant (CAm) en réponse à un acquittement d'installation dudit élément indépendant et en fonction d'au moins un paramétrage contenu dans le descripteur dudit élément indépendant, un élément dépendant au moins de l'installation de l'élément indépendant paramétré (CAm) étant installé (AS8) en réponse au moins à l'acquittement de paramétrage dudit élément indépendant paramétré.

5. - Procédé conforme à la revendication 4, selon lequel le déploiement asynchrone est arrêté (AS15) lorsqu'au moins un acquittement (AS14) de paramétrage d'élément indépendant (CA) n'est pas reçu à l'expiration d'une troisième temporisation prédéterminée (T2) déclenchée au début du déploiement asynchrone.

6. - Procédé conforme à l'une quelconque des revendications 2 à 5, selon lequel, au cours du déploiement asynchrone (DAS), le premier moyen de traitement (CP, PI) commande également, sensiblement en parallèle, indépendamment de tout ordonnancement des éléments, un paramétrage (AS11) d'au moins un élément dépendant (CX) en réponse à un acquittement d'installation dudit élément dépendant et en fonction d'au moins un paramètre contenu dans le descripteur dudit élément dépendant.

7. - Procédé conforme à la revendication 6, selon lequel le déploiement asynchrone est arrêté (AS19) lorsqu'au moins un acquittement (AS18) de paramétrage d'élément dépendant (CX) n'est pas reçu à l'expiration d'une quatrième temporisation prédéterminée (T3, T4) déclenchée au début du déploiement asynchrone.

8. - Procédé conforme aux revendications 1 à 7, selon lequel au moins l'un des déploiements est un déploiement synchrone (DS) au cours duquel le premier moyen de traitement (CP) commande séquentiellement, les uns après les autres, des installations (S5) de tous les éléments (CA) indépendants d'autres installations respectivement en fonction des descripteurs des éléments indépendants, puis des éventuels paramétrages (S7) d'éléments indépendants respectivement en réponse à des acquittements des installations de ces éléments indépendants et en fonction de paramètres contenus dans les descripteurs de ces éléments indépendants, puis des installations (S9) de tous les éléments (CX) dépendants chacun d'au moins un élément indépendant respectif (CA) respectivement en réponse chacune à un acquittement de l'éventuel paramétrage dudit au moins élément indépendant respectif et en fonction des descripteurs des éléments dépendants, et des éventuels paramétrages (S11) d'éléments dépendants respectivement en réponse à des acquittements des installations des éléments dépendants et en fonction des éventuels paramètres contenus dans les descripteurs des éléments dépendants.

9. - Procédé conforme à l'une quelconque des revendications 2 à 8, selon lequel les éléments indépendants sont des composants logiciels (CA), et les éléments dépendants sont des connexions (CX) chacune entre deux composants logiciels respectifs, et/ou sont des composants logiciels (CA).

10. - Procédé conforme à l'une quelconque des revendications 1 à 9, selon lequel l'un des déploiements comporte l'installation d'au moins un élément (CA, CX) de l'application ayant au moins une propriété présentant une dégradation, sélectionnée préalablement (E51).

11. - Procédé conforme à l'une quelconque des revendications 1 à 10, selon lequel l'un des déploiements comporte l'installation d'au moins un élément (CA, CX) de l'application ayant une propriété associée à un poids, sélectionnée préalablement (E61).

12. - Procédé conforme à la revendication 11, selon lequel le poids est corrigé en fonction de critères de qualité prédéterminés sur au moins le déploiement précédent de l'application.

13. - Procédé conforme à l'une quelconque des revendications 1 à 12, selon lequel l'un des déploiements comporte l'installation de la première trouvée (E71) de plusieurs configurations sélectionnées préalablement d'au moins un élément (CA, CX) de l'application, les configurations d'élément ayant au moins une valeur de propriété différente.

14. - Procédé conforme à l'une quelconque des revendications 10 à 13, selon lequel l'une de valeurs d'une propriété ou l'une de plusieurs propriétés dans le descripteur d'au moins un élément (CA, CX) de l'application est sélectionnée par un usager possesseur du premier moyen de traitement (CP, PI) ou par le premier moyen de traitement (CP, PI) en fonction du contexte d'exécution de l'application (AP) transmis par le deuxième moyen de traitement (TE, PO).

15. - Procédé conforme à l'une quelconque des revendications 1 à 14, selon lequel les premier et deuxième moyens de traitement (PI, PO) sont inclus dans une carte à microcontrôleur (CP) et un terminal (TE) d'accueil de la carte.

16. - Objet électronique portable du type carte à microcontrôleur (CP), comprenant le premier moyen de traitement de données (PI) pour la mise en oeuvre du procédé conforme à l'une quelconque des revendications 1 à 15.

## Claims

1. A method for the deployment of an application (AP) composed of several distributed distant elements (CA, CX), from a first data processing means (CP, PI) containing elements descriptors (DCA, DCX), through a second data processing means (TE, PO) connected to elements implantation means (BI) for the execution of the deployed application, **characterized in that**, after a transmission (E3) of characteristics of the application execution context from the second to the first processing means, it comprises a selection (E5 to E8) of one among several deployments of the application.

2. A method according to claim 1, wherein at least one of the deployments is an asynchronous deployment (DAS), during which the first processing means (CP, PI) first controls, substantially in parallel, installations (AS1) of all the elements (CA) independent from other installations, respectively as a function of the descriptors of the independent elements, then controls, substantially in parallel, and independently from any sequencing of the elements, installations (AS8) of elements (CX), each depending on at least one installation of a respective independent element (CA) respectively in response, each, to the acknowledgement of the installation of said at least one respective independent element and as a function of the descriptors of the dependent elements.

3. A method according to claim 2, wherein the asynchronous deployment is stopped (AS13, AS17), when at least an acknowledgement (AS12) of installation of an independent element (CA) is not received upon expiry of a first predetermined time (T1) triggered at the start of the asynchronous deployment, or when at least one acknowledgement (AS16) of installation of a dependent element (CX) is not received upon expiry of a second predetermined time (T3) triggered at the start of the asynchronous deployment.

4. A method according to claim 2 or 3, wherein during the asynchronous deployment (DAS), the first processing means (CP, PI) also controls, substantially in parallel, independently from any sequencing of the elements, a parameterization (AS3) of at least one independent element (CAm), in response to an acknowledgement of installation of said independent element and as a function of at least one parameterization contained in the descriptor of said independent element, one element depending at least on the installation of the parameterized independent element (Cam) being installed (AS8) in response to at least the acknowledgement of parameterization of said parameterized independent element.

5. A method according to claim 4, wherein the asynchronous deployment is stopped (AS15) when at least one acknowledgement (AS14) of an independent element (CA) parameterization is not received upon expiry of a third predetermined time (T2) triggered at the start of the asynchronous deployment.

6. A method according to any one of claims 2 to 5, wherein, during the asynchronous deployment (DAS), the first processing means (CP, PI) also controls, substantially in parallel, independently from any sequencing of the elements, a parameterization (AS11) of at least one dependent element (CX), in response to an acknowledgement of installation of said dependent element and as a function of at least one parameter contained in the descriptor of said dependent element.

7. A method according to claim 6, wherein the asynchronous deployment is stopped (AS19) when at least one acknowledgement (AS184) of a dependent element (CX) parameterization (CA) is not received upon expiry of a fourth predetermined time (T3, T4) triggered at the start of the asynchronous deployment.

8. A method according to claims 1 to 7, wherein at least one of the deployments is a synchronous deployment (DS) during which the first processing means (CP) sequentially controls, in turn, installations (S5) of all the elements (CA) independent from other installations, respectively, as a function of the descriptors of the independent elements, then on the parameterizations (S7), if any, of independent elements, respectively in response to acknowledgements of the installations of such independent elements and as a function of parameters contained in the descriptors of such independent elements, then of the installations (S9) of all the elements (CX) depending, each, on at least one respective independent element (CA), in response, respectively, each, to an acknowledgement of the parameterization, if any, of said at least respective independent element and as a function of the descriptors of the dependent elements, and the parameterizations (S11), if any, of the dependent elements, respectively in response to the acknowledgements of the installations of the dependent elements and as a function of the parameters, if any, contained in the descriptors of the dependent elements.

9. A method according to any one of claims 2 to 8, wherein the independent elements are software components (CA), and the dependent elements are connections (CX), each between two respective software components and/or are software components (CA).

10. A method according to any one of claims 1 to 9, wherein one of the deployments includes the installation of at least one element (CA, CX) of the application having at least one previously selected (E51) property showing a degradation.

11. A method according to any one of claims 1 to 10, wherein one of the deployments includes the installation of at least one element (Ca, CX) of the application having one previously selected (E61) property related to a weight.

12. A method according to claim 11, wherein the weight is corrected as a function of predetermined quality criteria on at least the previous deployment of the application.

13. A method according to any one of claims 1 to 12, wherein one of the deployments includes the installation of the first found (E71) one among several previously selected configurations of at least one element (CA, CX) of the application, the configurations of element having at least a different value of property.

14. A method according to any one of claims 10 to 13, wherein one among the values of a property or one among several properties in the descriptor of at least one element (CA, CX) of the application is selected by a user owning the first processing means (CP, PI) or by the first processing means (CP, PI) as a function of the application (AP) execution context transmitted by the second processing means (TE, PO).

15. A method according to any one of claims 1 to 14, wherein the first and second processing means (PI, PO) are included in a microcontroller card type (CP) and a card docking terminal (TE).

16. A portable electronic object of the microcontroller card type (CP), comprising the first data processing means (PI) for the implementation of the method according to any one of claims 1 to 15.

## Patentansprüche

1. Verfahren für die Umsetzung einer aus mehreren verteilten, ausgelagerten Elementen (CA, CX) bestehenden Applikation (AP), ab einem ersten Datenverarbeitungsmittel (CP, PI) mit Deskriptoren (DCA, DCK) der Elemente, über ein zweites Datenverarbeitungsmittel (TE, PO), das mit Montagemittel für die Elemente (BI) verbunden ist, um die umgesetzte Applikation auszuführen, **dadurch gekennzeichnet, dass** es nach einer Übertragung (E3) von Merkmalen der Ausführungsumgebung der Applikation vom zweiten zum ersten Verarbeitungsmittel eine Wahl (E5 bis E8) einer von mehreren Umsetzungen der Applikation umfasst.

2. Verfahren gemäß Anspruch 1, nach dem mindestens eine der Umsetzungen eine asynchrone Umsetzung (DAS) ist, während der das erste Verarbeitungsmittel (CP, PI) zunächst etwa parallel die Installationen (AS1) aller von anderen Installationen unabhängigen Elemente (CA) befiehlt, jeweils entsprechend den Deskriptoren der unabhängigen Elemente, und dann etwa parallel, unabhängig von jeglicher Ordnung der Elemente, die Installationen (AS8) von Elementen (CX), die jeweils von mindestens einer Installation eines jeweils unabhängigen Elements (CA) abhängen, jeweils in Beantwortung der Quittierung der Installation des genannten jeweiligen mindestens unabhängigen Elements und entsprechend den Deskriptoren der abhängigen Elemente.

3. Verfahren gemäß Anspruch 2, nach dem die asynchrone Umsetzung gestoppt wird (AS13, AS17), wenn mindestens eine Quittierung (AS12) der Installation eines unabhängigen Elements (CA) nicht nach Ablauf einer ersten vorgegebenen, bei Beginn der asynchronen Umsetzung ausgelösten Verzögerung (T1) erhalten wurde, oder wenn mindestens eine Quittierung (AS16) der Installation eines abhängigen Elements (CX) nicht nach Ablauf einer zweiten vorgegebenen, bei Beginn der asynchronen Umsetzung ausgelösten Verzögerung (T3) erhalten wurde.

4. Verfahren gemäß Anspruch 2 oder 3, nach dem das erste Verarbeitungsmittel (CP, PI) während der asynchronen Umsetzung (DAS) ebenfalls etwa parallel, unabhängig von jeglicher Ordnung der Elemente, eine Parametrierung (AS3) mindestens eines unabhängigen Elements (CAm) befiehlt, in Beantwortung einer Installationsquittierung des genannten unabhängigen Elements und entsprechend mindestens einer im Deskriptor des genannten unabhängigen Elements enthaltenen Parametrierung, wobei mindestens ein abhängiges Element der Installation des parametrierten unabhängigen Elements (CAm) in Beantwortung mindestens der Quittierung der Parametrierung des genannten parametrierten unabhängigen Elements installiert wird.

5. Verfahren gemäß Anspruch 4, nach dem die asynchrone Umsetzung gestoppt wird (AS15), wenn mindestens eine Quittierung (AS14) der Parametrierung eines unabhängigen Elements (CA) nicht nach Ablauf einer dritten vorgegebenen, bei Beginn der asynchronen Umsetzung ausgelösten Verzögerung (T2) erhalten wurde.

6. Verfahren gemäß einem der Ansprüche 2 bis 5, bei dem das erste Verarbeitungsmittel (CP, PI) während der asynchronen Umsetzung (DAS) ebenfalls etwa parallel, unabhängig von jeglicher Ordnung der Elemente, eine Parametrierung (AS11) mindestens eines abhängigen Elements (CX) befiehlt, in Beantwortung einer Installationsquittierung des genannten abhängigen Elements und entsprechend mindestens eines im Deskriptor des genannten abhängigen Element enthaltenen Parameters.

7. Verfahren gemäß Anspruch 6, bei dem die asynchrone Umsetzung gestoppt wird (AS19), wenn mindestens eine Quittierung (AS18) der Parametrierung eines abhängigen Elements (CX) nicht nach Ablauf einer vorgegebenen vierten, bei Beginn der asynchronen Umsetzung ausgelösten Verzögerung (T3, T4) erhalten wurde.

8. Verfahren gemäß den Ansprüchen 1 bis 7, bei dem mindestens eine der Umsetzungen eine synchrone Umsetzung (DS) ist, bei der das erste Verarbeitungsmittel (CP) sequentiell, die einen nach den anderen, die Installationen (S5) aller unabhängigen Elemente (CA) anderer Installationen, jeweils entsprechend den Deskriptoren der unabhängigen Elemente befiehlt, dann eventuelle Parametrierungen (S7) von unabhängigen Elementen jeweils in Beantwortung von Quittierungen der Installationen dieser unabhängigen Elemente und entsprechend von in den Deskriptoren dieser unabhängigen Elemente enthaltenen Parametern, dann die Installationen (S9) aller jeweils von mindestens einem unabhängigen Element (CA) abhängigen Elemente (CX), jeweils in Beantwortung einer Quittierung der eventuellen Parametrierung des genannten jeweiligen unabhängigen Elements und entsprechend den Deskriptoren der abhängigen Elemente, und eventuelle Parametrierungen (S11) von abhängigen Elementen jeweils in Beantwortung von Quittierungen der Installationen der abhängigen Elemente und entsprechend eventueller in den Deskriptoren der abhängigen Elemente enthaltener Parameter.

9. Verfahren gemäß einem der Ansprüche 2 bis 8, bei dem die unabhängigen Elemente Softwarekomponenten (CA) und die abhängigen Elemente Verbindungen (CX) zwischen jeweils zwei Softwarekomponenten, und/oder Softwarekomponenten (CA) sind.

10. Verfahren gemäß einem der Ansprüche 1 bis 9, bei dem eine der Umsetzungen die Installation mindestens eines Elements (CA, CX) der Applikation umfasst, das mindestens eine zuvor gewählte (E51) Eigenschaft hat, die eine Verschlechterung aufweist.

11. Verfahren gemäß einem der Ansprüche 1 bis 10, nach dem eine der Umsetzungen die Installation mindestens eines Elements (CA, CX) der Applikation umfasst, das eine einem Gewicht zugeordnete, vorher gewählte (E61) Eigenschaft aufweist.

12. Verfahren gemäß Anspruch 11, nach dem das Gewicht korrigiert wird entsprechend vorgegebenen Qualitätskriterien an mindestens der vorherigen Umsetzung der Applikation.

13. Verfahren gemäß einem der Ansprüche 1 bis 12, nach dem eine der Umsetzungen die Installation der ersten von mehreren gefundenen (E71), vorher gewählten Konfigurationen mindestens eines Elements (CA, CX) der Applikation umfasst, wobei die Elementkonfigurationen mindestens einen unterschiedlichen Eigenschaftswert haben.

14. Verfahren gemäß einem der Ansprüche 10 bis 13, nach dem einer der Werte einer Eigenschaft oder eine von mehreren Eigenschaften im Deskriptor mindestens eines Elements (CA, CX) der Applikation von einem Benutzer, Inhaber des ersten Verarbeitungsmittels (CP, CI), oder vom ersten Verarbeitungsmittel (CP, PI) gewählt wird entsprechend der vom zweiten Verarbeitungsmittel (TE, PO) übertragenen Ausführungsumgebung der Applikation (AP).

15. Verfahren gemäß einem der Ansprüche 1 bis 14, nach dem das erste und das zweite Verarbeitungsmittel (PI, PO) in einer Mikroprozessorkarte (CP) und in einem Empfangsterminal (TE) der Karte enthalten sind.

16. Tragbares elektronische Objekt vom Typ Mikroprozessorkarte (CP), mit einem ersten Datenverarbeitungsmittel (PI) für die Durchführung des Verfahrens gemäß einem der Ansprüche 1 bis 15.
